# EUROPÄISCHE PATENTSCHRIFT

(11) **EP 2 885 827 B1**
(45) Veröffentlichungstag und Bekanntmachung des Hinweises auf die Patenterteilung: **09.08.2017**
(21) Anmeldenummer: 13734981.7
(22) Anmeldetag: 26.06.2013
(51) Int. Cl.: H01M 2/02, H01M 2/10, H01M 2/16, H01M 10/04, H01M 2/14

(54) **VERSPANNEN VON BATTERIEZELLEN DURCH EINE BOMBIERTE AUSGESTALTUNG DES BATTERIEGEHÄUSES**
TENSIONING BATTERY CELLS BY MEANS OF A BULGING DESIGN OF THE BATTERY HOUSING
SERRAGE DE CELLULES DE BATTERIE PAR UNE CONFIGURATION BOMBÉE DU BOÎTIER DE BATTERIE

(30) Priorität: 14.08.2012 DE 102012214443
(43) Veröffentlichungstag der Anmeldung: 24.06.2015
(73) Patentinhaber: Robert Bosch GmbH, 70442 Stuttgart (DE)
(72) Erfinder: GERUNDT, Oliver, 71292 Friolzheim (DE); EICHENDORF, Andreas, 70374 Stuttgart (DE); DEPONTE, Rene, 74372 Sersheim (DE); FEIGL, Markus, 71706 Markgroeningen (DE)
(86) Internationale Anmeldenummer: PCT/EP2013/063370
(87) Internationale Veröffentlichungsnummer: WO 2014/026793

(56) Entgegenhaltungen:
- EP-A1- 2 466 679
- GB-A- 1 428 132
- JP-A- 2001 126 677
- US-A1- 2011 070 476

## Beschreibung

### Stand der Technik

Batterien werden in vielen Bereichen der Technik eingesetzt. Beispielsweise können mehrere einzelne Batteriezellen zu einem Modul zusammengeschlossen werden. Ferner können mehrere Module zu einem sogenannten Batteriepack zusammengefügt werden. Auf diese Weise entstehen Hochleistungsbatterien, beispielsweise Hochvoltbatterien.

Üblicherweise sind die Batteriezellen rechteckig bzw. quaderförmig ausgeführt. Um eine bessere Handhabung zu gewährleisten und eine möglichst große Energiemenge in einem möglichst geringen Volumen bereitstellen zu können, werden die rechteckigen Batteriezellen zu Modulen verspannt. Ferner trägt die Verspannung zu einer Erhöhung der Batterielebensdauer bei.

Zur Verspannung der Batterien gegeneinander wird dabei ein elastisches Element in der Kraftflusskette benötigt, um beispielweise Toleranzen der einzelnen Batteriezellen bzw. der Lackierungen und Isolierungen auszugleichen. Dabei werden die Batteriezellen üblicherweise nebeneinandergestellt. Anschließend werden an den Außenseiten, beispielsweise rechts und links, Federn bzw. vorgebogene Bleche angeordnet. Die Bleche fungieren beispielsweise als Blattfedern und werden bis zu einer bestimmten Vorspannkraft zusammengepresst. Um die Spannung zwischen den Blattfedern aufrechterhalten zu können, werden die Blattfedern beispielsweise mit sogenannten Zugblechen verbunden. Um eine gleichmäßige Druckverteilung auf die Batteriezellen zu erreichen, werden zwischen die federnden Bleche und die Batteriezellen Stahlplatten eingefügt. Auch die Zugbleche sind üblicherweise aus Stahl gefertigt, um die hohen Kräfte gleichmäßig zu verteilen.

Patentanmeldung JP2001126677 zeigt ein verspanntes bombiertes Zellgehäuse.

### Offenbarung der Erfindung

Es kann daher ein Bedarf an einer verbesserten Batteriezelle, einem verbesserten vorgespannten Batteriemodul sowie entsprechenden Herstellungsverfahren bestehen, die insbesondere eine gewichtsreduzierte und gegebenenfalls kostengünstigere Ausgestaltung eines vorgespannten Batteriemoduls ermöglichen.

Dieser Bedarf kann durch den Gegenstand der vorliegenden Erfindung gemäß den unabhängigen Ansprüchen gedeckt werden. Vorteilhafte Ausführungsformen der vorliegenden Erfindung sind in den Ansprüchen beschrieben.

Im Folgenden werden Merkmale, Einzelheiten und mögliche Vorteile einer Vorrichtung gemäß Ausführungsformen der Erfindung im Detail diskutiert.

Gemäß einem ersten Aspekt der Erfindung wird eine Batteriezelle für vorgespannte Batteriemodule vorgestellt. Die Batteriezelle weist ein Zellgehäuse und mindestens einen Chemikalienträger auf. Der Chemikalienträger ist dabei im Zellgehäuse angeordnet. Das Zellgehäuse ist bombiert ausgeführt.

Anders ausgedrückt basiert die Idee der vorliegenden Erfindung darauf, eine Batteriezelle bereitzustellen, deren Zellgehäuse konvex nach außen gewölbt ist und dabei deformierbar und bis zu einem gewissen Grad komprimierbar bzw. elastisch ausgeführt ist. Auf diese Weise wird die Funktion der zuvor beschriebenen federnden Bleche in die einzelnen Batteriezellen verlegt. Hierdurch können mindestens zwei gewichtsintensive Bauelemente, nämlich z.B. die federnden Bleche entfallen. Auf diese Weise werden sowohl Gewicht als auch Kosten eingespart. Ferner muss durch die bombierte Ausführung der Zellgehäuse und den Verzicht auf federnde Bleche an den Seiten eines Batteriemoduls eine geringere Längentoleranz als mit federnden Blechen eingehalten werden. Die Längentoleranz eines Batteriemoduls mit erfindungsgemäßen Batteriezellen entspricht lediglich nur noch der Toleranz einer Pressvorrichtung in einer Modulmontage. Somit kann für ein ganzes Batteriepack mit mehreren Modulen eine engere Längentoleranz eingehalten werden. Hierdurch kann ferner ein Bauraum für Batteriemodule bzw. Batteriepacks, beispielsweise in einem Fahrzeug, verringert werden.

Die Batteriezelle, das vorgespannte Batteriemodul und ein aus vorgespannten Batteriemodulen bestehendes Batteriepack können beispielsweise in Elektro- oder in Hybridfahrzeugen eingesetzt werden.

Die Batteriezelle kann vorzugsweise als Lithiumionenbatteriezelle ausgeführt sein. Ferner kann die Batteriezelle als Bleiakku, als Nickelwasserstoffakku, als Nickeleisenakku, als Lithiumpolymerakku, als Lithiummetallakku, als Lithiummanganakku, als Lithiumtitanatakku, als Lithiumschwefelakku, als Silberzinkakku oder als Zinkbromakku ausgeführt sein.

Das Zellgehäuse kann auch als "Can" bezeichnet werden und kann beispielsweise ein metallisches Material aufweisen. Insbesondere kann das Zellgehäuse aus tiefgezogenem Aluminium hergestellt sein. Im Zellgehäuse sind ein oder mehrere Chemikalienträger angeordnet. Die Chemikalienträger können beispielsweise als "Jellyrolls" bezeichnet werden. Dabei können die Chemikalienträger ein Anodenmaterial und ein Kathodenmaterial aufweisen. Beispielsweise können das Anodenmaterial und das Kathodenmaterial als Folien ausgeführt sein, die mit unterschiedlichen Schichten versehen und aufeinander gewickelt sind.

Das Zellgehäuse ist bombiert ausgeführt, das heißt, zumindest eine Zellwand ist nach außen gewölbt. Ferner können alle Zellwände nach außen gewölbt sein. Des Weiteren kann zusätzlich der Zellboden nach außen gewölbt sein. Die Bombierung des Zellgehäuses kann vor oder nach dem Einfügen der Chemikalienträger ins Zellgehäuse durchgeführt werden. Durch die Bombierung ist das Zellgehäuse deformierbar bzw. komprimierbar, so dass nun auch ohne die federnden Bleche elastische Elemente in der Kraftflusskette eines Batteriemoduls vorhanden sind.

Beispielsweise kann die Bombierung derart sein, dass das Zellgehäuse auf jeder Seite eine Erhöhung bzw. Wölbung von bis zu 2 mm, z.B. gegenüber einer Ebene durch die Eckpunkte der Batteriezelle, aufweist. Anders ausgedrückt kann die Dicke des Zellgehäuses im Querschnitt um bis zu 4 mm durch die Bombierung zunehmen.

Gemäß einem Ausführungsbeispiel der Erfindung weist die Batteriezelle ein aufgeschäumtes Material auf, welches zwischen dem Zellgehäuse und dem Chemikalienträger angeordnet ist. Das aufgeschäumte Material ist ein elastisches bzw. deformierbares und komprimierbares Material, das beispielsweise Kunststoff oder ein Verbundmaterial aufweist. Das aufgeschäumte Material kann eine zellige Struktur und eine niedrige Materialdichte aufweisen. Ferner kann das aufgeschäumte Material eine hohe Wärmeleitfähigkeit aufweisen. Das aufgeschäumte Material kann dabei beispielsweise physikalisch, chemisch oder mechanisch geschäumt werden.

Insbesondere kann das aufgeschäumte Material so gewählt sein, dass es möglichst wenig mit dem Chemikalienträger reagiert bzw. gegen diesen beständig ist. Ferner kann das aufgeschäumte Material dazu beitragen, den Druck, der durch das Verspannen auf die Batteriezelle wirkt, gleichmäßig auf den Chemikalienträger zu verteilen.

Gemäß einem weiteren Ausführungsbeispiel der Erfindung weist das aufgeschäumte Material Polypropylen auf. Das Polypropylen kann die chemische Strukturformel C₃H₆ aufweisen und als teilkristalliner Thermoplast ausgeführt sein. Die Dichte des Polypropylenmaterials liegt dabei beispielsweise zwischen 0,895 g/cm³ und 0,92 g/cm³. Zusätzlich zum Propylen kann das aufgeschäumte Material mineralische Materialien wie Kreide oder Glasfasern aufweisen.

Gemäß einem weiteren Ausführungsbeispiel der Erfindung weist das Zellgehäuse einen Gehäuseboden und eine Gehäusewand auf. Der Gehäuseboden und die Gehäusewand sind dabei konvex nach außen gewölbt. Insbesondere kann das Zellgehäuse mit einem eckigen oder einem runden oder ovalen Querschnitt ausgeführt sein. Ist das Zellgehäuse mit einem eckigen Querschnitt ausgeführt, so kann jede einzelne Gehäusewand nach außen gewölbt sein.

Gemäß einem zweiten Aspekt der Erfindung wird ein vorgespanntes Batteriemodul vorgestellt. Das vorgespannte Batteriemodul, auch als verspanntes Batteriemodul bezeichnet, weist mindestens zwei oben beschriebene Batteriezellen auf. Ferner weist das Batteriemodul einen steifen Modulrahmen auf, der kleinere Abmessungen aufweist als die Abmessungen der Gesamtzahl der im Modulrahmen anzuordnenden bombierten Batteriezellen. Die Batteriezellen sind dabei derart in den Modulrahmen eingefügt, dass sie aufgrund ihrer Bombierung gegeneinander gepresst sind und dass die Bombierung ggf. komprimiert ist.

Insbesondere können zwischen 5 und 13 Batteriezellen in einem Batteriemodul kombiniert werden. Dabei können gegebenenfalls erfindungsgemäße bombierte Batteriezellen mit handelsüblichen Batteriezellen in einem Batteriemodul verspannt werden. Ferner können lediglich erfindungsgemäße Batteriezellen mit einem bombierten Zellgehäuse in dem vorgespannten Batteriemodul vorgesehen sein.

Der Modulrahmen ist dabei steif ausgeführt. Das heißt, der Modulrahmen ist steifer bzw. weniger deformierbar als das bombierte Zellgehäuse. Die Batteriezellen können beim Einfügen oder bereits vor dem Einfügen in den Modulrahmen gegeneinander gepresst und das bombierte Gehäuse derart komprimiert werden, dass die Batteriezellen in den Modulrahmen passen. Anschließend behalten die Batteriezellen diese Form aufgrund der kleineren Abmessung des steifen Modulrahmens und den dadurch ausgeübten Druck bei.

Beispielsweise kann eine einzelne bombierte Batteriezelle eine Dicke von 49 mm aufweisen. Ist die Batteriezelle im steifen Modulrahmen angeordnet und gegen die anderen Batteriezellen gepresst, so weist sie nur noch eine Dicke von ca. 45 mm auf. Anders ausgedrückt kann die Bombierung der Batteriezellen geglättet sein, sobald sie gegeneinander gepresst und in den Modulrahmen eingefügt sind. Dadurch üben die Batteriezellen im Modulrahmen eine Spannkraft aufeinander aus.

Gemäß einem weiteren Ausführungsbeispiel der Erfindung weist der Modulrahmen ein Metall und/oder einen Verbundwerkstoff auf. Insbesondere können die Endplatten des Modulrahmens ein Metall und/oder einen Verbundwerkstoff aufweisen. Das Metall kann dabei beispielsweise Stahl und insbesondere Edelstahl sein. Ferner kann das Metall ein Aluminium sein. Der Verbundwerkstoff kann beliebige Materialien aufweisen. Insbesondere kann der Verbundwerkstoff einen Chrom-Nickel Stahl 1.45510 mit Polyamid und Glasfasern. Die Glasfasern entsprechen dabei z.B. 6.6 bis 30% des Polyaminds (PA 6.6-30%GF).

Gemäß einem weiteren Ausführungsbeispiel der Erfindung weist der Modulrahmen mindestens zwei Endplatten und mindestens zwei Zugbleche auf. Die Zugbleche sind dabei derart mit den Endplatten verbunden, dass die Endplatten Druck auf die Batteriezellen ausüben. Ist der Modulrahmen beispielsweise quaderförmig ausgeführt, so können zwei gegenüberliegende Platten als Endplatten ausgeführt sein. Ferner können die übrigen vier Seiten als Zugbleche ausgeführt sein. Die Zugbleche können stoffschlüssig, formschlüssig oder kraftschlüssig mit den Endplatten verbunden werden. Insbesondere können die Zugbleche mit den Endplatten verschweißt, verschraubt oder verklebt werden. Ferner können die Zugbleche mit Hilfe von Spannbändern an den Endplatten fixiert werden.

Gemäß einem dritten Aspekt der Erfindung wird ein Verfahren zur Herstellung einer oben beschriebenen bombierten Batteriezelle vorgestellt. Das Verfahren weist die folgenden Schritte auf: Bereitstellen eines Zellgehäuses; Anordnen eines oder mehrerer Chemikalienträger im Zellgehäuse und Bombieren des Zellgehäuses. Die Verfahrensschritte können in beliebiger Reihenfolge ausgeführt werden. Beispielweise kann das Zellgehäuse zunächst bombiert werden. Anschließend können die Chemikalienträger ins Zellgehäuse eingefügt werden. Alternativ können die Chemikalienträger zunächst im Zellgehäuse eingefügt werden. Anschließend kann die Bombierung des Zellgehäuses stattfinden.

Gemäß einem weiteren Ausführungsbeispiel der Erfindung findet das Bombieren des Zellgehäuses durch Einfüllen eines Mediums ins Innere des Zellgehäuses statt. Das Medium ist dabei aus der folgenden Gruppe von Medien ausgewählt: Ein Gas unter Druck, ein aufgeschäumter Kunststoff oder ein Verbundmaterial. Das Gas unter Druck kann beispielsweise Luft sein, die unter einem Druck in das Zellgehäuse eingefüllt wird, der höher ist als der Atmosphärendruck.

Gemäß einem vierten Aspekt der Erfindung wird ein Verfahren zur Herstellung eines oben beschriebenen vorgespannten Batteriemoduls vorgestellt. Das Verfahren weist die folgenden Schritte auf: Bereitstellen von mindestens zwei der oben beschriebenen bombierten Batteriezellen; Bereitstellen eines steifen Modulrahmens, der kleinere Abmessungen aufweist als die Gesamtabmessung der in den Modulrahmen einzufügenden bombierten Batteriezellen; und Anordnen der bombierten Batteriezellen derart im Modulrahmen, dass sie aufgrund ihrer Bombierung gegeneinander gepresst sind. Dabei kann das Anordnen der bombierten Batteriezellen im Modulrahmen ferner umfassen: Zusammenpressen der bombierten Batteriezellen, so dass die bombierten Zellgehäuse komprimiert werden und die Batteriezellen somit in den Modulrahmen eingefügt werden können.

Gemäß einem weiteren Ausführungsbeispiel der Erfindung weist das Anordnen der bombierten Batteriezellen im Modulgehäuse ferner auf: Einführen der Batteriezellen durch eine erste Öffnung seitlich in das Modulgehäuse; und Verschließen der ersten Öffnung durch eine Endplatte derart, dass die bombierten Batteriezellen gegeneinander gepresst sind. Bei dem Herstellungsverfahren gemäß diesem Ausführungsbeispiel müssen die bombierten Batteriezellen vor dem Einfügen in das Modulgehäuse nicht gegeneinander gepresst werden. Beispielsweise kann das Modulgehäuse an fünf Seiten durch eine erste Endplatte und vier Zugbleche geschlossen sein. Eine zweite Endplatte ist noch nicht am Gehäuse angeordnet, so dass eine erste seitliche Öffnung freigegeben ist. Durch diese Öffnung können die bombierten Batteriezellen in das Modulgehäuse eingefügt werden. Anschließend wird Druck auf die bombierten Batteriezellen ausgeübt, so dass die bombierten Zellgehäuse komprimiert werden und die zweite Endplatte die erste Öffnung verschließen kann. Anschließend kann die zweite Endplatte an die Zugbleche angeschweißt werden. Dabei kann die zweite Endplatte mit einem oder mit mehreren Zugblechen verschweißt werden.

Gemäß einem weiteren Ausführungsbeispiel der Erfindung weist das Anordnen der bombierten Batteriezellen im Modulgehäuse ferner auf: Vorsehen von elastischen Platten seitlich an den Batteriezellen; Einführen der Batteriezellen durch eine zweite Öffnung von oben oder von unten in das Modulgehäuse derart, dass die bombierten Batteriezellen gegeneinander gepresst sind; und Verschließen der zweiten Öffnung durch ein Zugblech. Bei diesem Ausführungsbeispiel werden die bombierten Batteriezellen zunächst seitlich mit elastischen Platten, die beispielsweise ein aufgeschäumtes dünnes Material aufweisen, versehen. Anschließend werden die bombierten Batteriezellen zusammengepresst, so dass die bombierten Gehäuse komprimiert werden. Danach werden die bombierten Batteriezellen in das Gehäuse eingefügt.

Die elastischen Platten werden dabei jeweils an der äußersten Batteriezelle, beispielsweise rechts außen und links außen, angeordnet, so dass ein elastisches Material zwischen der jeweiligen Batteriezelle und der Endplatte des Modulgehäuses vorhanden ist, wenn die Batteriezellen im Modulgehäuse angeordnet sind. Die elastischen Platten verhindern dabei eine Beschädigung der bombierten Batteriezellen und insbesondere der Isolierung der bombierten Batteriezellen beim Einschieben in das Modulgehäuse. Die zweite Öffnung wird durch ein Zugblech verschlossen, welches anschließend an die weiteren Zugbleche und/oder an die Endplatten des Modulgehäuses angeschweißt werden kann.

Weitere Merkmale und Vorteile der vorliegenden Erfindung werden dem Fachmann aus der nachfolgenden Beschreibung beispielhafter Ausführungsformen, die jedoch nicht als die Erfindung beschränkend auszulegen sind, unter Bezugnahme auf die beigelegten Zeichnungen ersichtlich.
- Fig. 1: zeigt eine Draufsicht auf ein bekanntes vorgespanntes Batteriemodul
- Fig. 2A: zeigt schematisch ein Ersatzschaubild des bekannten Verspannungsprinzips
- Fig. 2B: zeigt schematisch ein Ersatzschaubild des Verspannungsprinzips gemäß einem Ausführungsbeispiel der Erfindung
- Fig. 3: zeigt einen Querschnitt durch eine bombierte Batteriezelle gemäß einem Ausführungsbeispiel der Erfindung
- Fig. 4A: zeigt die bombierten Batteriezellen vor dem Verspannen
- Fig. 4B: zeigt die bombierten Batteriezellen nach dem Verspannen
- Fig. 5: zeigt ein Herstellungsverfahren für ein vorgespanntes Batteriemodul gemäß einem Ausführungsbeispiel der Erfindung
- Fig. 6: zeigt ein Herstellungsverfahren für ein vorgespanntes Batteriemodul gemäß einem weiteren Ausführungsbeispiel der Erfindung
- Fig. 7: zeigt Batteriemodule und ein Batteriepack gemäß einem Ausführungsbeispiel der Erfindung

Alle Figuren sind lediglich schematische Darstellungen erfindungsgemäßer Vorrichtungen bzw. ihrer Bestandteile gemäß Ausführungsbeispielen der Erfindung. Insbesondere Abstände und Größenrelationen sind in den Figuren nicht maßstabsgetreu wiedergegeben. In den verschiedenen Figuren sind sich entsprechende Elemente mit den gleichen Referenznummern versehen.

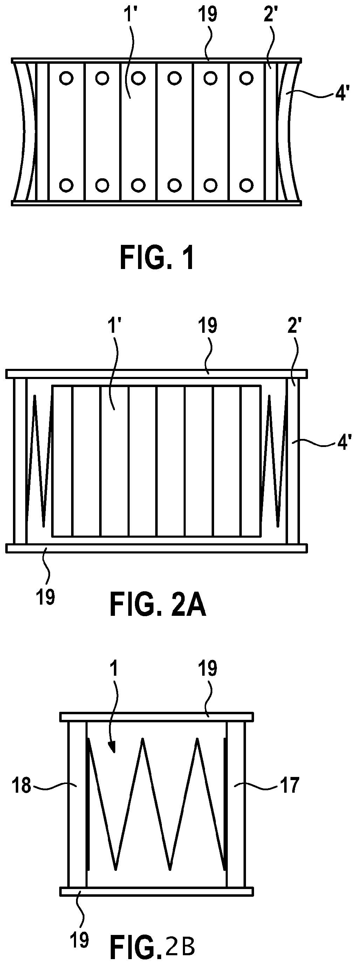

In Fig. 1 ist eine Draufsicht auf ein bekanntes vorgespanntes Batteriemodul dargestellt. Dabei sind bekannte Batteriezellen 1' quaderförmig ausgeführt. Die Batteriezellen 1' sind nebeneinander gestellt. Rechts und links der äußeren Batteriezellen 1' sind Federbleche 4' vorgesehen, die ähnlich wie Blattfedern wirken. Um eine gleichmäßige Druckverteilung auf die Batteriezellen 1' zu erreichen, werden zwischen die Federbleche 4' und die Batteriezellen 1' Druckverteilungsplatten 2' aus Stahl eingelegt. Die Federbleche 4' werden bis zu einer bestimmten Vorspannkraft zusammengepresst. Um die Spannung zu halten, werden die Federbleche 4' mit sogenannten Zugeblechen 19 verschweißt oder verschraubt. Beispielsweise kann die Masse eines Bauteils mit Federblech 4' und Druckverteilungsplatte 2'bei ca. 300 g liegen. Werden zum Beispiel acht einzelne Batteriemodule zu einem Batteriepack zusammengeschlossen, so ergibt sich eine Masse von 4,8 kg, die auf die Druckverteilungsplatten 2' und die Federbleche 4' entfällt.

Ein Ersatzschaubild des in Fig. 1 dargestellten bekannten Batteriemoduls ist in Fig. 2A gezeigt. Die steifen quaderförmigen Batteriezellen 1' sind dabei als quasifeste Elemente zwischen Druckverteilungsplatten 2', die als steife Platten ausgeführt sind, angeordnet. Die Druckverteilungsplatten 2' werden durch vorgewölbte Federbleche 4' an die Batteriezellen 1' gedrückt. Ein Kraftfluss wird durch Zugbleche 19 geschlossen, die mit den Federblechen 4' verschweißt oder verschraubt sind.

Fig. 2B zeigt ein Ersatzschaubild des Verspannungsprinzips gemäß einem Ausführungsbeispiel der Erfindung. Die erfindungsgemäßen Batteriezellen 1 sind bombiert ausgeführt und fungieren damit selbst als federnde Elemente. D.h. die Batteriezellen 1 weisen eine gezielte Elastizität auf. Insbesondere wird die Funktion der Federbleche 4', also ein Aufbringen von Kraft und ein Ausgleichen von Toleranzen, in die bombierte Batteriezelle 1 verlegt. Die Batteriezellen 1 sind dabei zwischen steifen Endplatten 17,18 eingespannt. Die Endplatten 17,18 sind mit Zugblechen 19 verschweißt oder verschraubt und bilden einen steifen Modulrahmen. Auf diese Weise kann auf ein federndes Zusatzbauteil, insbesondere auf die Federbleche 4' verzichtet werden. Hierdurch werden sowohl Kosten als auch Gewicht eingespart. Ferner wird die Längentoleranz eines vorgespannten Batteriemoduls verbessert. Insbesondere entspricht die Längentoleranz des vorgespannten Batteriemoduls einer Toleranz der Pressvorrichtung bei der Modulmontage. Durch die Einhaltung engerer Längentoleranzen kann Bauraum beispielsweise in einem Fahrzeug, in dem das vorgespannte Batteriemodul verbaut wird, eingespart werden.

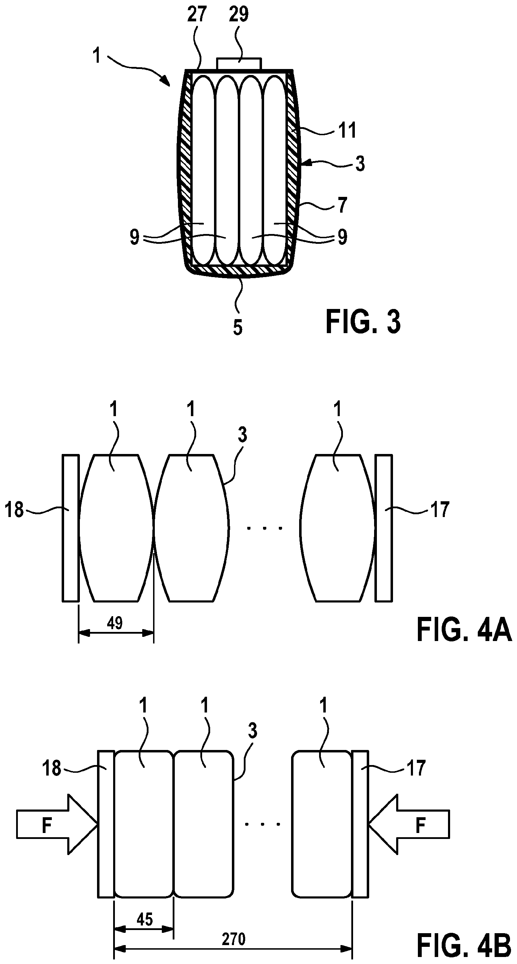

Fig. 3 zeigt einen Querschnitt durch eine bombierte Batteriezelle 1. Die Batteriezelle 1 weist dabei ein Zellgehäuse 3 auf, in dem ein Chemikalienträger 9 angeordnet ist. Der Chemikalienträger 9 kann dabei beispielsweise mehrere einzelne Jellyrolls aufweisen. Das Zellgehäuse 3 kann dabei einen Gehäuseboden 5, eine Gehäusewand 7 und einen Gehäusedeckel 27 aufweisen. Am Gehäusedeckel 27 ist dabei ein Zellterminal 29 vorgesehen. Das Zellterminal 29 kann dabei beispielsweise ein Plus- oder Minuspol sein, der mit einer Kathode oder einer Anode des Chemikalienträgers 9 verbunden ist.

Das Zellgehäuse 3 und insbesondere die Gehäusewände 7 und der Gehäuseboden 5 sind konvex nach außen gewölbt. Die maximale Erhöhung einer Gehäusewand 7 kann beispielsweise, im Vergleich zum Nennmaß nach der Verpressung, bis zu 2 mm betragen. Zwischen der Gehäusewand 7 und dem Chemikalienträger 9 kann ein aufgeschäumtes Material 11, auch als Kunststoffmatrix bezeichnet, eingebracht sein. Das aufgeschäumte Material kann einen durch die Verspannung der Batteriezellen ausgeübten Druck gleichmäßig auf den Chemikalienträger 9 verteilen.

In Fig. 4A und 4B ist das Verspannen der Batteriezellen 1 am Beispiel eines Moduls mit sechs 63Ah-VDA-Batteriezellen mit einer Nennmaßdicke von 45 mm gezeigt. Die Batteriezellen 1 können zusammen mit einer ersten steifen Endplatte 17 und einer zweiten steifen Endplatte 18 in eine Verspannvorrichtung gegeben werden. Im bombierten Zustand weisen die Batterien jeweils eine Dicke bzw. Breite von 49 mm auf. Die Endplatten 17,18 weisen jeweils eine Dicke von 3 mm auf. Insgesamt ergibt sich eine Moduldicke von 300 mm. Die Batteriezellen 1 mit den Endplatten 17,18 sind in Fig. 4A vor dem Zusammenpressen bzw. Verspannen dargestellt.

Fig. 4B zeigt das Modul nach dem Verspannen. Das heißt, eine Kraft F wird auf die Endplatten 17,18 ausgeübt, so dass das bombierte Zellgehäuse 3 komprimiert wird und die einzelnen Batteriezellen 1 anschließend ein Nennmaß von 45 mm aufweisen. Nach dem Pressvorgang weist das gesamte Batteriemodul mit sechs Batteriezellen 1 und zwei Endplatten 17,18 eine Gesamtdicke von beispielsweise 276 mm auf. Die Spannkraft kommt dabei aus den Batteriezellen 1 selbst.

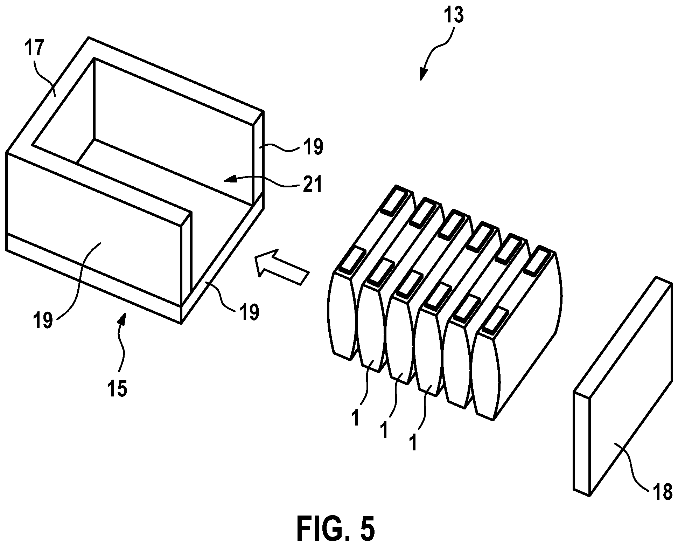

Fig. 5 zeigt ein Herstellungsverfahren für ein vorgespanntes Batteriemodul 13. Im Ausführungsbeispiel in Fig. 5 kann ein steifer Modulrahmen 15 in einer Verpressvorrichtung montiert und verschweißt werden. Beispielsweise kann der steife Modulrahmen 15 dabei eine erste Endplatte 17 und Zugbleche 19 aufweisen. An einer Seite ist eine erste Öffnung 21 vorgesehen, die durch die zweite Endplatte 18 verschließbar ist. Die einzelnen bombierten Batteriezellen 1 können durch die erste Öffnung 21 in den steifen Modulrahmen 15 eingebracht werden. Die Fügerichtung ist durch einen Pfeil in Fig. 5 angedeutet. Anschließend kann die zweite Endplatte 18 in Position gebracht werden und die bombierten Batteriezellen 1 zusammengepresst werden, so dass die zweite Endplatte 18 die erste Öffnung 21 verschließt. Ferner kann anschließend die zweite Endplatte 18 angeschweißt oder angeschraubt werden.

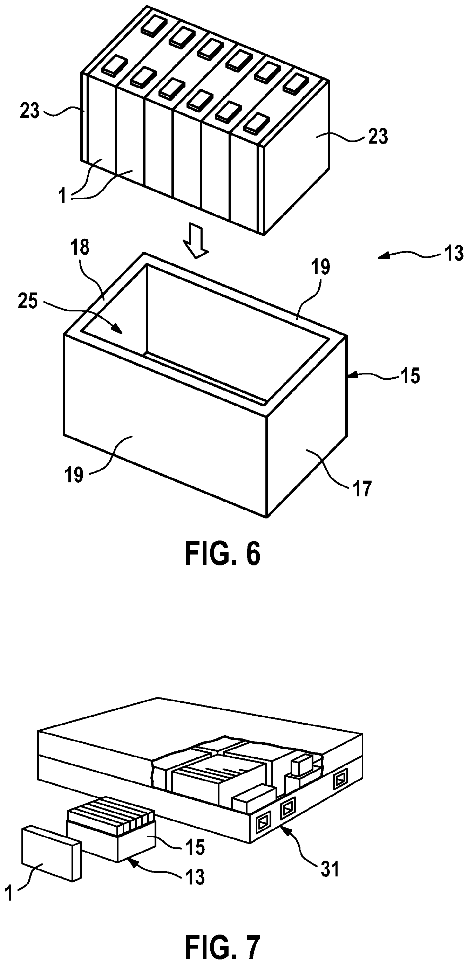

Fig. 6 zeigt ein weiteres Herstellungsverfahren für ein vorgespanntes Batteriemodul 13. Im Ausführungsbeispiel in Fig. 6 kann der steife Modulrahmen 15 als vormontierte Baugruppe an ein Montageband geliefert werden. Dabei können die bombierten Batteriezellen 1 zunächst nebeneinander angeordnet werden und seitlich rechts und links jeweils eine elastische Platte 23 vorgesehen werden. Die elastische Platte dient dabei dem Schutz der Batteriezellen 1 beim Einschieben in den steifen Modulrahmen 15. Die Batteriezellen 1 werden zusammen mit den elastischen Platten 23 gegeneinander gepresst und anschließend durch eine zweite Öffnung 25 im Ausführungsbeispiel in Fig. 6 von oben in den steifen Modulrahmen 15 eingefügt. Die Fügerichtung ist durch einen Pfeil dargestellt. Anschließend kann die zweite Öffnung 25 durch ein Zugblech 19 verschlossen werden.

In Fig. 7 ist eine perspektivische Ansicht einer bombierten Batteriezelle 1 eines vorgespannten Batteriemoduls 13 mit mehreren einzelnen Batteriezellen 1 und ferner ein Batteriepack 31 mit mehreren einzelnen vorgespannten Batteriemodulen 13 dargestellt.

Abschließend wird angemerkt, dass Ausdrücke wie "aufweisend" oder ähnliche nicht ausschließen sollen, dass weitere Elemente oder Schritte vorgesehen sein können. Des Weiteren sei darauf hingewiesen, dass "eine" oder "ein" keine Vielzahl ausschließen. Außerdem können in Verbindung mit den verschiedenen Ausführungsformen beschriebene Merkmale beliebig miteinander kombiniert werden. Es wird ferner angemerkt, dass die Bezugszeichen in den Ansprüchen nicht als den Umfang der Ansprüche beschränkend ausgelegt werden sollen.

## Patentansprüche

1. Batteriezelle (1) für vorgespannte Batteriemodule (13), die Batteriezelle (1) Aufweisend ein Zellgehäuse (3);
wobei das Zellgehäuse bombiert ausgeführt ist; einen Chemikalienträger (9);
wobei der Chemikalienträger (9) im Zellgehäuse (3) angeordnet ist;
**dadurch gekennzeichnet, dass**
die Batteriezelle (1) ferner ein aufgeschäumtes Material (11) aufweist;
wobei das aufgeschäumte Material (11) zwischen dem Zellgehäuse (3) und
dem Chemikalienträger (9) angeordnet ist.

2. Batteriezelle (1) gemäß Anspruch 1, wobei das aufgeschäumte Material (11) Polypropylen aufweist.

3. Batteriezelle (1) gemäß einem der Ansprüche 1 oder 2, wobei das Zellgehäuse (3) einen Gehäuseboden (5) und eine Gehäusewand (7) aufweist;
wobei der Gehäuseboden (5) und die Gehäusewand (7) konvex nach außen gewölbt sind.

4. Vorgespanntes Batteriemodul (13), das Batteriemodul (13) aufweisend mindestens zwei bombierte Batteriezellen (1) gemäß einem der Ansprüche 1 bis 3; einen steifen Modulrahmen (15), der kleinere Abmessungen aufweist als die bombierten Batteriezellen (1);
wobei die bombierten Batteriezellen (1) derart in den Modulrahmen (15) eingefügt sind, dass sie auf Grund ihrer Bombierung gegeneinander gepresst sind.

5. Vorgespanntes Batteriemodul (13) gemäß Anspruch 4, wobei der Modulrahmen (15) ein Metall und/oder einen Verbundwerkstoff aufweist.

6. Vorgespanntes Batteriemodul (13) gemäß einem der Ansprüche 4 und 5, wobei der Modulrahmen (15) mindestens zwei Endplatten (17, 18) und Zugbleche (19) aufweist;
wobei die Zugbleche (19) derart mit den Endplatten (17, 18) verbunden sind, dass die Endplatten (17, 18) Druck auf die Batteriezellen (1) ausüben.

7. Verfahren zur Herstellung einer bombierten Batteriezelle (1) gemäß einem der Ansprüche 1 bis 3, das Verfahren aufweisend die folgenden Schritte Bereitstellen eines Zellgehäuses (3);
Anordnen eines Chemikalienträgers (9) im Zellgehäuse (3);
das Verfahren **gekennzeichnet dadurch, dass** es ferner aufweist
Bombieren des Zellgehäuses (3) wobei das Bombieren des Zellgehäuses (3) durch Einfüllen eines Mediums ins Innere des Zellgehäuses stattfindet; wobei das Medium ein aufgeschäumter Kunststoff oder ein Verbundmaterial ist.

8. Verfahren zur Herstellung eines vorgespannten Batteriemoduls (13) gemäß einem der Ansprüche 4 bis 6, das Verfahren aufweisend die folgenden Schritte,
Bereitstellen von mindestens zwei bombierten Batteriezellen (1) gemäß einem der Ansprüche 1 bis 3 Bereitstellen eines steifen Modulrahmens (15), der kleinere Abmessungen aufweist als die bombierten Batteriezellen (1);
das Verfahren **gekennzeichnet dadurch, dass** es ferner aufweist Anordnen der bombierten Batteriezellen (1) derart im Modulrahmen (15), dass sie auf Grund ihrer Bombierung gegeneinander gepresst sind.

9. Verfahren gemäß Anspruch 8, wobei das Anordnen der bombierten Batteriezellen (1) im Modulgehäuse (15) ferner aufweist:
Einführen der bombierten Batteriezellen (1) durch eine erste Öffnung (21) seitlich in das Modulgehäuse (15); und
Verschließen der ersten Öffnung (21) durch eine Endplatte (18) derart, dass die bombierten Batteriezellen (1) gegeneinander gepresst sind.

10. Verfahren gemäß Anspruch 8, wobei das Anordnen der bombierten Batteriezellen (1) im Modulgehäuse (15) ferner aufweist:
Vorsehen von elastischen Platten (23) seitlich an den bombierten Batteriezellen (1);
Einführen der bombierten Batteriezellen (1) durch eine zweite Öffnung (25) von oben oder von unten in das Modulgehäuse (15), derart, dass die bombierten Batteriezellen (1) gegeneinander gepresst sind; und Verschließen der zweiten Öffnung (25) durch ein Zugblech (19).

## Claims

1. Battery cell (1) for prestressed battery modules (13), the battery cell (1) including a cell housing (3) ;
wherein the cell housing is of cambered design;
a chemicals carrier (9);
wherein the chemicals carrier (9) is arranged in the cell housing (3);
**characterized in that** the battery cell (1) further includes a foamed material (11);
wherein the foamed material (11) is arranged between the cell housing (3) and the chemicals carrier (9).

2. Battery cell (1) according to Claim 1,
wherein the foamed material (11) includes polypropylene.

3. Battery cell (1) according to either of Claims 1 and 2,
wherein the cell housing (3) includes a housing base (5) and a housing wall (7);
wherein the housing base (5) and the housing wall (7) are curved outwards in a convex manner.

4. Prestressed battery module (13), the battery module (13) including
at least two cambered battery cells (1) according to one of Claims 1 to 3;
a rigid module frame (15) which has smaller dimensions than the cambered battery cells (1);
wherein the cambered battery cells (1) are inserted into the module frame (15) in such a way that, on account of their camber, the said battery cells are pressed against one another.

5. Prestressed battery module (13) according to Claim 4,
wherein the module frame (15) includes a metal and/or a composite material.

6. Prestressed battery module (13) according to either of Claims 4 and 5,
wherein the module frame (15) includes at least two end plates (17, 18) and pull plates (19);
wherein the pull plates (19) are connected to the end plates (17, 18) in such a way that the end plates (17, 18) exert pressure on the battery cells (1).

7. Method for manufacturing a cambered battery cell (1) according to one of Claims 1 to 3, the method including the following steps:
providing a cell housing (3);
arranging a chemicals carrier (9) in the cell housing (3) ;
the method being **characterized in that** it further includes
cambering of the cell housing (3), wherein the cambering of the cell housing (3) takes place by filling a medium into the interior of the cell housing;
wherein the medium is a foamed plastic or a composite material.

8. Method for manufacturing a prestressed battery module (13) according to one of Claims 4 to 6, the method including the following steps:
providing at least two cambered battery cells (1) according to one of Claims 1 to 3;
providing a rigid module frame (15) which has smaller dimensions than the cambered battery cells (1);
the method being **characterized in that** it further includes
arranging the cambered battery cells (1) in the module frame (15) in such a way that, on account of their camber, the said battery cells are pressed against one another.

9. Method according to Claim 8, wherein arranging the cambered battery cells (1) in the module housing (15) further includes:
inserting the cambered battery cells (1) laterally into the module housing (15) through a first opening (21); and
closing the first opening (21) by way of an end plate (18) in such a way that the cambered battery cells (1) are pressed against one another.

10. Method according to Claim 8, wherein arranging the cambered battery cells (1) in the module housing (15) further includes:
providing elastic plates (23) laterally on the cambered battery cells (1);
inserting the cambered battery cells (1) into the module housing (15), from above or from below, through a second opening (25) in such a way that the cambered battery cells (1) are pressed against one another; and
closing the second opening (25) by way of a pull plate (19).

## Revendications

1. Cellule de batterie (1) destinée à des modules de batterie précontraints (13), la cellule de batterie (1) comportant un boîtier de cellule (3) ;
dans lequel le boîtier de cellule est réalisé de manière à présenter une forme bombée ;
un support de produit chimique (9) ;
dans lequel le support de produit chimique (9) est disposé dans le boîtier de cellule (3) ;
**caractérisé en ce que** la cellule de batterie (1) comporte en outre un matériau moussé (11) ;
dans lequel le matériau moussé (11) est disposé entre le boîtier de cellule (3) et le support de produit chimique (9).

2. Cellule de batterie (1) selon la revendication 1,
dans lequel le matériau moussé (11) comporte du polypropylène.

3. Cellule de batterie (1) selon l'une quelconque des revendications 1 ou 2,
dans laquelle le boîtier de cellule (3) comporte un fond de boîtier (5) et une paroi de boîtier (7) ;
dans laquelle le fond de boîtier (5) et la paroi de boîtier (7) sont bombés de manière convexe vers l'extérieur.

4. Module de batterie précontraint (13), le module de batterie (13) comportant au moins deux cellules de batterie (1) bombées selon l'une quelconque des revendications 1 à 3 ;
un châssis de module rigide (15) présentant des dimensions inférieures à celles des cellules de batterie (1) bombées ;
dans lequel les cellules de batterie (1) bombées sont insérées dans le châssis de module (15) de manière à ce qu'elles soient comprimées les unes contre les autres en raison de leur caractère bombé.

5. Module de batterie précontraint (13) selon la revendication 4,
dans lequel le châssis de module (15) comporte un métal et/ou un matériau composite.

6. Module de batterie précontraint (13) selon l'une quelconque des revendications 4 et 5,
dans lequel le châssis de module (15) comporte au moins deux plaques d'extrémité (17, 18) et une tôle de traction (19) ;
dans lequel la tôle de traction (19) est reliée aux plaques d'extrémité (17, 18) de manière à ce que les plaques d'extrémité (17, 18) exercent une pression sur les cellules de batterie (1).

7. Procédé de fabrication d'une cellule de batterie (1) bombée selon l'une quelconque des revendications 1 à 3, le procédé comportant les étapes consistant à :
prévoir un boîtier de cellule (3) ;
disposer un support de produit chimique (9) dans le boîtier de cellule (3) ;
le procédé étant **caractérisé en ce qu'**il consiste en outre à :
bomber le boîtier de cellule (3), dans lequel l'opération consistant à bomber le boîtier de cellule (3) est effectuée en introduisant un agent à l'intérieur du boîtier de cellule ; dans lequel l'agent est une matière plastique moussée ou un matériau composite.

8. Procédé de fabrication d'un module de batterie précontraint (13) selon l'une quelconque des revendications 4 à 6, le procédé comportant les étapes consistant à :
prévoir au moins deux cellules de batterie (1) bombées selon l'une quelconque des revendications 1 à 3,
prévoir un châssis de module rigide (15) qui présente des dimensions inférieures à celles des cellules de batterie (1) bombées ;
le procédé étant **caractérisé en ce qu'**il consiste en outre à :
disposer les cellules de batterie (1) bombées dans le châssis de module (15) de manière à ce qu'elles soient comprimées les unes contre les autres en raison de leur caractère bombé.

9. Procédé selon la revendication 8,
dans lequel l'agencement des cellules de batterie (1) bombées dans le boîtier de module (15) consiste en outre à :
introduire les cellules de batterie (1) bombées à travers une première ouverture (21) latérale ménagée dans le boîtier de module (15) ; et
refermer la première ouverture (21) au moyen d'une plaque d'extrémité (18) de manière à ce que les cellules de batterie (1) bombées soient comprimées les unes contre les autres.

10. Procédé selon la revendication 8,
dans lequel l'agencement des cellules de batterie (1) bombées dans le boîtier de module (15) consiste en outre à :
prévoir latéralement des plaques élastiques (23) sur les cellules de batterie (1) bombées ;
introduire les cellules de batterie (1) bombées à travers une deuxième ouverture (25) par le haut ou par le bas dans le boîtier de module (15) de manière à ce que les cellules de batterie (1) bombées soient comprimées les unes contre les autres ; et
refermer la deuxième ouverture (25) au moyen d'une tôle de traction (19).
